# EUROPÄISCHE PATENTSCHRIFT

(11) **EP 0 908 030 B1**
(45) Veröffentlichungstag und Bekanntmachung des Hinweises auf die Patenterteilung: **22.10.2003**
(21) Anmeldenummer: 97931671.8
(22) Anmeldetag: 27.06.1997
(51) Int. Cl.: H04B 10/22, H04B 10/06, H01S 3/06, H01S 3/17

(54) **VORRICHTUNG ZUM EMPFANG OPTISCHER SIGNALE MIT EINEM LICHTLEITENDEN GEGENSTAND**
DEVICE FOR RECEIVING OPTICAL SIGNALS WITH A LIGHT GUIDE
RECEPTEUR DE SIGNAUX OPTIQUES POURVU D'UN CONDUCTEUR DE LUMIERE

(30) Priorität: 27.06.1996 DE 19625870
(43) Veröffentlichungstag der Anmeldung: 14.04.1999
(73) Patentinhaber: Schleifring und Apparatebau GmbH, 82256 Fürstenfeldbruck (DE)
(72) Erfinder: POISEL, Hans, D-91227 Leinburg (DE)
(74) Vertreter: Lohr, Georg, Dr.
(86) Internationale Anmeldenummer: DE9701346
(87) Internationale Veröffentlichungsnummer: WO98000936

(56) Entgegenhaltungen:
- EP-A- 0 249 746
- EP-A- 0 586 713
- DE-A- 4 421 616
- US-A- 3 760 297

## Beschreibung

### Technische Gebiet

Die Erfindung bezieht sich auf eine Vorrichtung zum Empfang optischer Signale mit einem lichtleitenden Gegenstand, in den das zu empfangende optische Signal einkoppelbar ist. Der lichtleitende Gegenstand weist ein Material auf, dessen Elektronenanordnung durch energetische Anregung invertierbar ist und das durch stimulierte Emision Licht mit einer Emissionswellenlänge abstrahlt, die der Wellenlänge der zu empfangenden optischen Signale entspricht. Für die Invertierung des Elektronenzustandes ist eine Anregungseinheit vorgesehen. Ferner ist an dem lichtleitenden Gegenstand eine Detektoreinrichtung zur Detektion des Lichtes optisch angekoppelt, das im Wege der durch die in den lichtleitenden Gegenstand eingekoppelten optischen Signale stimulierten Emissionsprozesse erzeugbar ist.

### Stand der Technik

Vorrichtungen zum Empfang optischer Signale sind aus einer Vielzahl technischer und wissenschaftlicher Anwendungsbereiche bekannt. Allen bekannten optischen Detektoreinrichtungen liegt das Problem zugrunde, elektromagnetische Strahlung in eine Informationseinheit umzuwandeln, die in direktem Bezug zum optischen Ausgangssignal ist und technisch, d.h. mit den Mitteln heutiger Auswerteelektronik verarbeitbar ist. Ein wesentlicher Aspekt für die Realisierung optischer Detektoren von hoher Qualität ist die möglichst direkte Umwandlung von elektromagnetischer Strahlung in elektrische Signale, die einer weiteren Auswerteelektronik zugeführt werden können. Dieser Anforderung werden insbesondere photoempfindliche Halbleiterdetektoren gerecht, bei denen die zu detektierenden Lichtquanten im Halbleiterbauelement direkt elektrische Ladungen freisetzen, die entsprechend ausgewertet werden können.

Die bekannten, auf der Basis von Halbleitermaterialien aufgebauten optischen Detektoreinrichtungen weisen in aller Regel nur sehr klein begrenzte photosensible Detektoroberflächen auf, doch können auch großflächige Detektoroberflächen durch mosaikartiges Zusammensetzen aus einer Vielzahl von Einzeldetektoren gebildet werden. Auch ist es grundsätzlich möglich, beliebige Detektorflächengeometrien auf der Basis von optischen Halbleiterdetektoren zusammenzubauen, doch bedarf es zum einen einen sehr großen schaltungstechnischen Aufwand zur Verschaltung aller Einzeldetektoren mit einer Auswerteeinheit, zum anderen sind sehr hohe Kosten mit großflächigen Detektoroberflächen verbunden; zum dritten sinkt die Ansprechgeschwindigkeit mit zunehmender Fläche.

Möchte man jedoch über eine möglichst große Fläche elektromagnetische Strahlung detektieren, so eignen sich hierfür großflächig ausgebildete, lichtabsorbierende Detektorflächen, die aus einem vorwiegend transparentem Material bestehen, in dem fluoreszierende Farbstoffmoleküle eingebunden sind. Trifft Licht auf eine derartige Detektorfläche auf, so werden die fluoreszierenden Moleküle angeregt und senden innerhalb der Absorberschicht Fluoreszenzlicht aus, das durch Reflexionen an den Grenzflächen innerhalb des Materials vorzugsweise an die seitlichen Randbereiche der Absorberschicht gelangt, an denen geeignete optische Detektoren zur Umwandlung in elektrische Signale angebracht sind.

Den vorstehend beschriebenen Mechanismus machen sich insbesondere optische Drehübertrager zu Nutzen, mittels derer optische Signale zwischen einem sich drehenden und einem dazu stationär verbleibenden Teil übertragen werden können. Entlang einer stationär verbleibenden vorzugsweise zu einem geschlossenen Kreis gebogene Lichtleitfaser, in der fluoreszierende Moleküle eingearbeitet sind, bewegt sich eine optische Sendeeinrichtung, beispielsweise eine LED, die zur Lichtübertragung entlang der Bahn der Lichtleitfaser bewegt wird. Durch seitliches Einstrahlen in die Lichtleitfaser wird innerhalb der Faser Fluoreszenzlicht erzeugt, das ebenfalls über interne Reflexionen zu den Lichtleitfaserenden geleitet wird, an denen jeweils optische Detektorvorrichtungen vorgesehen sind. Mit Hilfe einer derartigen, zum Beispiel aus der DE-A-4 421 616 bekannten Vorrichtung ist es möglich, optische Signale zwischen einem drehenden und einem dazu stationär verbleibenden Teil zu übertragen.

Da das in der Lichtleitfaser hervorgerufene Fluoreszenzlicht durch spontane Emission entsteht, ist die Bandbreite für die zu übertragenden optischen Signale durch die Fluoreszenz-Lebensdauer der Farbstoffe in der Faser begrenzt. Möchte man jedoch den Empfang von optischen Signalen mit möglichst großer Bandbreite ohne Informationsverluste empfangen, so sind hierbei den bekannten fluoreszierenden Farbstoffen Grenzen gesetzt.

### Darstellung der Erfindung

Die Aufgabe der Erfindung ist eine Vorrichtung zum Empfang optischer Signale mit einem lichtleitenden Gegenstand, in dem das zu empfangende optische Signal einkoppelbar ist und das mittels einer Detektoreinrichtung in elektrisch, weiter verarbeitbare Signale umgewandelt wird, derart weiterzubilden, daß zum einen die Lichtübertragung von den, in den lichtleitenden Gegenstand eingekoppelten optischen Signalen zu der Detektoreinrichtung auf möglichst direktem Weg erfolgt, ohne daß eine merkliche Signalschwächung eintritt. Es soll insbesondere möglich sein, den Empfang optischer Signale mit möglichst hoher Bandbreite weitgehend verlustfrei zu ermöglichen. Der Empfang der optischen Signale soll möglichst großflächig erfolgen, wobei die hiermit verbundenen Kosten möglichst gering zu halten sind. Der Empfänger soll sich insbesondere für den Einsatz in optischen Drehübertragern eignen.

Die Lösung der der Erfindung zugrundeliegenden Aufgabe ist im Anspruch 1 angegeben. Den Erfindungsgedanken vorteilhaft weiterbildende Merkmale sind Gegenstand der Ansprüche 1 bis 5. Anspruch 6 ff. bezieht sich auf eine erfindungsgemäße Verwendung der Vorrichtung für die optische Signalübertragung zwischen zwei sich relativ zueinander beweglichen Teilen.

Die Erfindung geht von der Idee aus, den zum Empfang optischer Signale vorgesehenen lichtleitenden Gegenstand mit einem Material zu versehen, dessen Elektronenanordnung durch energetische Anregung invertierbar ist und das durch stimulierte Emission Licht mit einer Emissionswellenlänge abstrahlt, die der Wellenlänge der zu empfangenden optischen Signale entspricht. Die Invertierung der Elektronenanordnung wird durch eine Anregungseinheit, vorzugsweise durch eine optische Pumplichtquelle hervorgerufen. An den lichtleitenden Gegenstand ist optisch eine Detektoreinrichtung zur Detektion des Lichtes angekoppelt, das im Wege der durch die in den lichtleitenden Gegenstand eingekoppelten optischen Signale stimulierten Emissionsprozesse erzeugbar ist. Der lichtleitende Gegenstand ist erfindungsgemäß aus einem Material, das vorzugsweise Kunststoff ist, worin bei Lichteinstrahlung mit einem Winkel zwischen 0° und 90° relativ zur Einstrahlungsoberfläche innerhalb des Materials durch elastische Streuung Streuicht erzeugt wird, wobei die Wellenlänge des Streulichtes der des eingestrahlten Lichtes entspricht. Wesentlich ist, daß das Streulicht Strahlungskomponenten in Richtung einer Hauptausbreitungsrichtung des lichtleitenden Gegenstandes aufweist. Damit ist gemeint, daß das auf den lichtleitenden Gegenstand einfallende Licht durch Streuprozesse eine Strahlungskomponente innerhalb des lichtleitenden Gegenstandes erzeugbar ist, die in die Richtung weist, in der die Detektoreinrichtung angeordnet ist. Eben diese Strahlungskomponente, die die gleiche Wellenlänge wie das optisch einfallende Signal aufweist, wird durch das in dem Gegenstand vorhandene, eine Besetztungsinversion aufweisende Material durch stimulierte Emissionsprozesse verstärkt. Die beim Verstärkungsvorgang erzeugte Strahlung hat nicht nur die gleiche Wellenlänge wie die erzeugende Strahlung, sondern auch gleiche Richtung, Phasenlage und Polarisation. Da der Prozess der Lichtverstärkung nicht spontan, sondern stimuliert erfolgt und der direkt durch das im lichtleitenden Gegenstand gestreute Licht hervorgerufen wird, ist die Bandbreite um mehrere Größenordnungen höher. Auf diese Weise ist es möglich, die optischen Signale über die erfindungsgemäß ausgebildete Empfangsvorrichtung weitgehend unverzerrt und verstärkt zur Detektoreinrichtung zu leiten.

Ein wesentlicher Aspekt der der Erfindung zugrundeliegenden Idee ist die elastische Streuung des einfallenden Lichtes innerhalb des lichtleitenden Gegenstandes, wodurch Streulicht auch in der Richtung innerhalb des Materials abgelenkt wird, in der die Detektoreinrichtungen angeordnet sind. Es ist erfindungsgemäß erkannt worden, daß der Anteil von elastischem Streulicht in transparenten Kunststoffmaterialien besonders stark auftritt.

Eine besondere Anwendungsmöglichkeit der erfindungsgemäß ausgebildeten Empfangsvorrichtung für optische Signale ist das Gebiet optischer Drehübertrager.

Hierbei ist der vorstehend beschriebene, erfindungsgemäß ausgebildete lichtleitende Gegenstand als eine Lichtleitfaser ausgeführt, entlang der eine Sendeeinrichtung geführt wird. Beispielsweise kann die Lichtleitfaser die Form eines Kreises aufweisen, entlang der eine Sendeeinrichtung verfährt, die auf einem sich relativ zur Lichtleitfaser drehenden Teil befindet.

Das in der Lichtleitfaser eingebrachte, in seiner elektronischen Besetzung invertierbare Material wird vorzugsweise mittels Pumplaser, die an den Faserenden der Lichtleitfaser vorgesehen sind, optisch angeregt und auf diese Weise in einen invertierten Besetzungszustand überführt.

Die von der optischen Sendeeinrichtung herrührenden optischen Signale werden seitlich in die aus Kunststoff gefertigte Lichtleitfaser eingestrahlt, wo unter Beibehaltung der ursprünglichen Wellenlänge, das Licht elastisch gestreut wird. Wesentlich hierbei ist, daß Strahlungskomponenten auch in Achsrichtung der Lichtleitfaser gestreut werden. Dieses elastische Streulicht wird nun im Wege der induzierten Emission auf dem ganzen Ring-Umfang verstärkt, wodurch an den Lichtleitfaserenden verstärktes Streulicht abgegeben wird, das die gleiche Wellenlänge aufweist wie die eingekoppelten optischen Signale. Da es sich bei dem Verstärkungsvorgang um induzierte Emission handelt, ist die Beschränkung der Bandbreite wie im bekannten Fall bei fluoreszierenden Farbstoffen durch die beschränkte Fluoreszenzlebensdauer nicht mehr gegeben, so daß der erfindungsgemäß ausgebildete Lichtleitfaserring um Größenordungen schneller ist, d.h. auch optische Signale mit einer hohen Modulationsfrequenz können ohne Informationsverluste empfangen und entsprechend ausgewertet werden.

Für die Detektion des an den Lichtleitfaserenden anliegenden verstärkten Signallichtes sind wellenlängenselektive Koppelelemente vorgesehen, die das für den Anregungsprozeß erforderliche Pumplicht, das von den Pumplasern erzeugt wird und auf einer anderen Wellenlänge liegt als die zu verarbeitenden optischen Signale, von der nachfolgenden Detektoreinrichtung optisch abkoppeln.

Neben der speziellen Anwendung der erfindungsgemäßen Vorrichtung zum Empfang optischer Signale für den Bereich der optischen Drehübertragung sind jedoch auch beliebig weitere Anwendungen denkbar. So ist es beispielsweise möglich, durch Vermessen der Signallaufzeiten zwischen dem Lichteinkoppelort und den an beiden Lichtfaserenden vorgesehenen Detektoreinheiten die Empfangsanordnung als positionsempfindlichen und/oder richtungsempfindlichen Detektor zu verwenden. Neben der Signallaufzeitmessung dient auch die Vermessung der Signalamplituden, der sich innerhalb der Lichtleitfaser ausbreitenden Lichtwellen den vorstehenden Detektionsmöglichkeiten.

### Kurze Beschreibung eines Ausführungsbeispiels

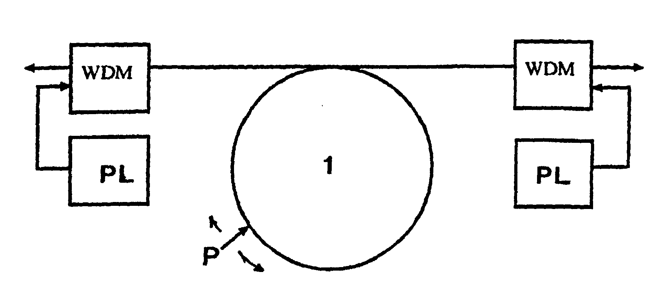

Ein besonders geeignetes Ausführungsbeispiel der erfindungsgemäßen Vorrichtung zum Empfang optischer Signale für den Einsatz optischer Drehübertrager ist in der beiliegenden Figur dargestellt.

Die in der Figur mit dem Bezugszeichen 1 schematisch dargestellte, aus Kunststoff gefertigte Lichtleitfaser ist zu einem Ring geformt und entspricht der Empfangseinrichtung für das Licht einer sich gegenüber der Lichtleitfaser bewegenden optischen Sendeeinrichtung, die in der Figur nicht dargestellt ist. Es wird angenommen, daß an der Stelle P die Sendeeinrichtung ein optisches Lichtsignal in die Lichtleitfaser 1 einkoppelt, das im Wege der vorstehend beschriebenen elastischen Streuung in beide Richtungen zur Faserachse abgelenkt wird. Die in der Lichtleitfaser 1 enthaltenen besetzungsinvertierten Materialien werden im gezeigten Beispiel durch optische Anregungsquellen, beispielsweise Pumplaser PL angeregt, wodurch sie zur stimulierten Lichtverstärkung der in Achsrichtung umgelenkten optischen Ausgangssignale beitragen. Wellenlängenselektive Koppler WDM dienen dabei dazu, das an den Lichtleitfaserenden austretende Signallicht von dem Pumplaserlicht zu trennen.

Die auf diese Weise empfangenen optischen Signale können Bandbreiten im GHz-Bereich aufweisen.

## Patentansprüche

1. Vorrichtung zum Empfang optischer Signale mit einem lichtleitenden Gegenstand (1), in den das zu empfangende optische Signal einkoppelbar ist und der Material enthält, dessen Elektronenanordnung durch energetische Anregung invertierbar ist und das durch stimulierte Emission Licht mit einer Emissionswellenlänge abstrahlt, die der Wellenlänge der zu empfangenden optischen Signale entspricht,
mit einer die Invertierung erzeugenden Anregungseinheit (PL) sowie einer an den lichtleitenden Gegenstand optisch angekoppelten Detektoreinrichtung zur Detektion des Lichtes, das im Wege der durch die in den lichtleitenden Gegenstand eingekoppelten optischen Signale stimulierten Emissionsprozesse erzeugbar ist,
**dadurch gekennzeichnet, daß** der lichtleitende Gegenstand aus einem Material besteht, vorzugsweise Kunststoff, das bei Lichteinstrahlung mit einem Winkel 0°< a ≤ 90° relativ zur Einstrahlungsoberfläche innerhalb des Materials durch elastische Streuung Licht, d.h. die Wellenlänge des Streulichtes entspricht der des eingestrahlten Lichtes, erzeugt, das eine Strahlungskomponente in Richtung einer Hauptausbreitungsrichtung des lichtleitenden Gegenstandes aufweist.

2. Vorrichtung nach Anspruch 1,
**dadurch gekennzeichnet, daß** der lichtleitende Gegenstand eine Lichtleitfaser ist, in der sich ein Anteil des elastischen Streulichts in Richtung der Faserachse ausbreitet.

3. Vorrichtung nach Anspruch 1 oder 2,
**dadurch gekennzeichnet, daß** die Anregungseinheit eine optische Pumplichtquelle ist.

4. Vorrichtung nach einem der Ansprüche 2 bis 3,
**dadurch gekennzeichnet, daß** an wenigstens einem Ende der Lichtleitfaser eine optische Pumplichtquelle (PL) und/oder ein wellenlängenselektives Element (WDM) vorgesehen ist, das das Pumplicht von den optischen Signalen filtert.

5. Verwendung der Vorrichtung gemäß der Ansprüche 1 bis 4 zur optischen Signalübertragung zwischen zwei sich relativ zueinander beweglichen Teilen, so daß die von einer Sendeeinheit abgestrahlten optischen Signale in den lichtleitenden Gegenstand eingekoppelt werden.

6. Verwendung nach Anspruch 5,
**dadurch gekennzeichnet, daß** der lichtleitende Gegenstand auf einem feststehenden Teil und eine optische Sendeeinrichtung, die die optischen Signale abstrahlt, derart auf einem sich drehenden Teil angeordnet sind, so daß während einer vollen Umdrehung des sich drehenden Teils die abgestrahten optischen Signale stets in den lichtleitenden Gegenstand einkoppelbar sind.

7. Verwendung der Vorrichtung gemäß der Ansprüche 1 bis 4 als positionsempfindlicher Detektor für Lichtstrahlung durch Auswertung von Signallaufzeiten und/oder Signalamplituden.

8. Verwendung der Vorrichtung gemäß der Ansprüche 1 bis 6 als richtungsempfindlicher Detektor für Lichtstrahlung durch Auswertung von Signallaufzeiten und/oder Signalamplituden.

## Claims

1. Device for receiving optical signals by means of a light-conducting object (1) into which the optical signal to be received can be coupled and which contains material whose electron array can be inverted by energetic stimulation and which, by stimulated emission, emits light having an emission wavelength that corresponds to the wavelength of the optical signals to be received,
comprising a stimulating unit (PL) generating said inversion, as well as a detector means optically coupled to said light-conducting object for detection of the light that can be generated by way of the emission processes stimulated by the optical signals coupled into said light-conducting object,
**characterised in that** said light-conducting object consists of a material, preferably a synthetic resin, which, in response to light incident at an angle of 0° < α ≤ 90° relative to the entry surface within the material, generates light by elastic diffusion, which means that the wavelength of the diffused light corresponds to the wavelength of the incident light, which light presents a radiation component in the direction of a principal direction of propagation of said light-conducting object.

2. Device according to Claim 1,
**characterised in that** said light-conducting object is a light-conducting fibre in which a fraction of said elastically diffused light propagates in the direction of the fibre axis.

3. Device according to Claim 1 or 2,
**characterised in that** said stimulating unit is an optical pumping light source.

4. Device according to any of the Claims 2 to 3,
**characterised in that** an optical pumping light source (PL) and/or an element selective in terms of wavelength (WDM) are provided on at least one end of said light-conducting fibre, which elements filters the pumped light out of the optical signals.

5. Application of the device according to the Claims 1 to 4 for the transfer of optical signals between two components mobile relative to each other, in such a way that the optical signals emitted by an emitter unit are coupled into said light-conducting object.

6. Application according to Claim 5,
**characterised in that** said light-conducting object is disposed on a stationary component and an optical emitter unit emitting said optical signals is disposed on a rotating component in such a way that in the course of a complete revolution of said rotating component the emitted optical signals can permanently be coupled into said light-conducting object.

7. Application of the device according to the Claims 1 to 4 as position-sensitive detector for the detection of incident light by evaluation of signal delays and/or signal amplitudes.

8. Application of the device according to the Claims 1 to 6 as directionally sensitive detector for the detection of incident light by evaluation of signal delays and/or signal amplitudes.

## Revendications

1. Dispositif à recevoir des signaux optiques moyennant d'un objet de guidage optique (1), dans lequel le signal optique à recevoir peut être couplé et qui contient du matériau dont la configuration électronique peut être invertie par stimulation énergétique et qui, par émission stimulée, émet de la lumière à une longueur d'ondes d'émission qui correspond à la longueur d'ondes des signaux optiques à recevoir,
comprenant une unité de stimulation (PL), qui crée ladite inversion, ainsi qu'un moyen détecteur couplée, de façon optique, audit objet de guidage optique afin de détecter la lumière qui peut être produit par des processus d'émission stimulés par les signaux optiques couplés dans ledit objet de guidage optique,
**caractérisé en ce que** ledit objet de guidage optique consiste en un matériau, de préférence une résine synthétique, qui, en réponse à la lumière incidente à un angle de 0° < α ≤ 90° relativement à la surface d'entrée au-dedans du matériau, produit de la lumière par diffusion élastique - ce qui signifie que la longueur d'ondes de la lumière diffusée correspond à la longueur d'ondes de la lumière incidente - cette lumière présentant une composant de rayonnement en sens d'une orientation principale de propagation dudit objet de guidage optique.

2. Dispositif selon la revendication 1,
**caractérisé en ce que** ledit objet de guidage optique est une fibre optique, dans laquelle une partie de ladite lumière diffusée de façon élastique se propage le long de l'axe de la fibre.

3. Dispositif selon la revendication 1 ou 2,
**caractérisé en ce que** ladite unité de stimulation est une source optique de lumière de pompage.

4. Dispositif selon la une quelconque des revendications 2 à 3,
**caractérisé en ce qu'**une source optique de lumière de pompage (PL) et/ou un élément sélectif par longueurs d'ondes (WDM) sont disposés à au moins une extrémité de ladite fibre optique, ces éléments filtrant la lumière de pompage en dehors des signaux optiques.

5. Emploi du dispositif selon les revendications 1 à 4 pour le transfert des signaux optiques entre deux composants mobiles l'un relativement à l'autre, d'une telle manière que les signaux optiques émis par une unité émetteur soient couplés dans ledit objet de guidage optique.

6. Emploi selon la revendication 5,
**caractérisé en ce que** ledit objet de guidage optique est disposé à un composant stationnaire et une unité émetteur optique, qui émet lesdits signaux optiques, est disposée à un composant rotatif d'une telle manière qu'au cours d'une révolution complète dudit composant rotatif, les signaux optiques émis puissent être couplé en continu dans ledit objet de guidage optique.

7. Emploi du dispositif selon les revendications 1 à 4 en tant que détecteur sensible à la position pour la détection de lumière incidente par évaluation des temps de transit des signaux et/ou des amplitudes des signaux.

8. Emploi du dispositif selon les revendications 1 à 6 en tant que détecteur sensible à la direction pour la détection de lumière incidente par évaluation des temps de transit des signaux et/ou des amplitudes des signaux.
